# EUROPEAN PATENT APPLICATION

(11) **EP 4 553 183 A1**
(43) Date of publication of application: **14.05.2025**
(21) Application number: 23209420.1
(22) Date of filing: 13.11.2023
(51) Int. Cl.: C22C 27/04, C22C 30/00, C23C 4/06, C23C 4/08, C23C 4/129, C23C 4/134, B22F 7/04, C22C 1/04

(54) **MO-NI-BASED ALLOYS FOR SURFACE TREATMENT OF MOLTEN METAL APPLICATIONS**

(71) Applicant: Höganäs AB (publ), 263 83 Höganäs (SE); Höganäs Germany GmbH, 38642 Goslar (DE)
(72) Inventor: Mittelstedt, Daniel, 51105 Köln (DE); Bigdeli, Sedigheh, 26337 Höganäs (SE); Lanz, Oliver, 79733 Goerwihl (DE); Schubert, Manuel, 79736 Rickenbach (DE)
(74) Representative: Höganäs AB (publ)

(57) **Abstract**

Herein are presented Mo-Ni-based alloys wherein, when coated using PTA, LC, HVOF, HVAF, and/or APS, dense and resistant coatings are formed. When the alloys of the present invention are applied in thicknesses from 0.1 mm - 5 mm, coatings are created which are suitable for being used as coatings for pot rolls for galvanizing sinks.

## Description

### TECHNICAL FIELD

The present disclosure concerns a coating system and application process for prolonging the service lifetime of guiding rollers for galvanizing baths or the like.

### BACKGROUND

In the production of steel sheets, a thin overlay of zinc, aluminum or aluminum-silicon alloy is applied in a galvanizing bath to protect the steel from corrosion. This production step requires guiding rolls to be fully immersed in molten zinc, zinc-aluminum, aluminum, or AlₓSi_{y}. Coatings are used to protect the surfaces of the guiding rolls against dross buildup. The bearing journals require sleeves or are made from high grade materials.

The present disclosure concerns a coating system and application process for prolonging the service lifetime of guiding rollers for galvanizing baths or the like. Further, the use of hazardous sealers is at least partially avoided.

Steel sheets require corrosion protection and are therefore coated with materials that form a protective layer by self-passivation. Typical coating materials on the steel sheets are zinc, zinc-aluminum, aluminum or AlₓSi_{y} since they offer a high corrosion protection and can be efficiently applied by passing the steel sheet through a bath of the molten material. All these overlay materials possess melting point temperatures below 700°C. In this temperature range the structural integrity of the components of these galvanizing lines made from high strength steels is given. The steel sheet is guided through the melt by so-called pot or sink rolls that are made from high strength steel.

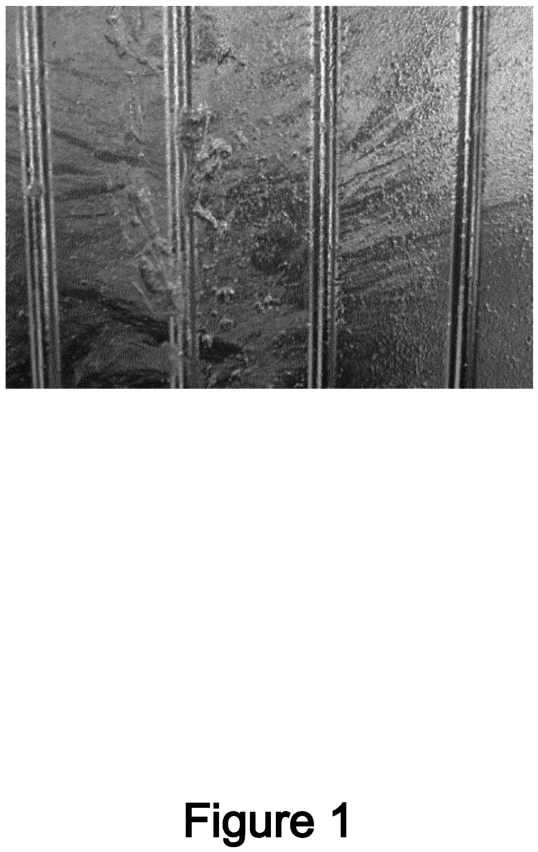

A major issue in the galvanizing process is the high reactivity of zinc and aluminum with especially iron-based materials. In this reaction aluminum or zinc chemically react and alloy with the substrate material of the pot roll or with debris from the steel sheet that may get deposited on the pot roll forming dross buildup (Figure 1).

Typical melt compositions are [EP2010690B1]:
- 99% Zn (Galvanizing)
- 95% Zn + 5% Al (Galvanneal)
- 55% Al + 43,5% Zn + 1,6% Si at > 550 °C (Galvalume)
- 89-92% Al + 8-11% Si at > 660 °C (Aluminizing)

Dross buildup on pot rolls was identified by galvanizers as a major cause of coating defects and line stoppages. This buildup is even more severe in Galvalume production than in galvanizing or galvanneal. It is known that the steel sheet dissolves in Galvalume at high rate due to the high bath temperature and high aluminum content, thus the high affinity of Fe to Al is the driver for a strong reaction. As example, whilst line stoppage, the steel sheet dissolves completely in Galvalume whilst it stays largely intact in galvanizing and galvanneal. The large amount of dissolved Fe precipitates out from the molten alloy as dross which is an Al-Fe-Si ternary intermetallic. The dross particles are carried around in the bath and become induced by the moving steel strip and the inductors and starts to gradually build-up on the roll and journal surfaces. However, the pot roll surface is preferred for dross build-up due each of change compared other elements of the galvanizing bath, a process driven e.g., by the higher Fe concentration of the melt (from steel dissolution) and lower temperature than the bath. A pot roll in Galvalume is typically changed every week due to excessive dross build-up, resulting in frequent line stoppages (Dross Buildup on Various Alloys in a Galvalume Bath, Y.H. Liu, A.B. File, N.-Y. Tang et al, 2007).

To this end, the present inventors have investigated alloys of molybdenum and nickel and have surprisingly found that when molybdenum and nickel alloys in accordance with the herein detailed compositions are formed it is possible to coat pot rolls using e.g., laser cladding methods, and form dense and wear resistant coatings of the present alloys, which have a higher service lifetime than what can currently be achieved with other alloys on the market, such as e.g., Tribaloy^{™} T-800 or Stellites^{™}, and at the same time sealing becomes superfluous.

In the art, molybdenum alloys for wear-resistant coating of screws or other machine parts are known from e.g., US 4,949,836 to Schostek, the alloys comprising 40-70 wt% Mo, 0-10 wt% Cr, 0.5-5 wt% boron, 0-1 wt% Zr, 0-1 wt% Ti, and the remainder being Ni, Co, or a mixture of Ni and Co.

Without being bound by this theory, the investigations of the present inventors have indicated that the alloys of the present invention advantageously form phases of Mo₅Si₃ and/or Cr₅B₃ which may be at the cause in application of the hot aluminum or AlₓSi_{y} -liquid, why a significantly higher wear resistance as it is for Tribaloy^{™} T-800 or Stellite^{™} 6 is recognizable.

Advantageously, the alloys can be applied via plasma transferred arc welding (PTAW), laser cladding (LC), High velocity oxygen fuel spraying (HVOF), High velocity air fuel spraying (HVAF), and/or atmospheric plasma spraying (APS) on any rotational symmetric geometry. The coating can be applied in single or multiple layers via PTA or LC and in several layers via APS. Since the coatings are dense, a sealing is not necessary.

### BRIEF DESCRIPTION OF THE DRAWINGS

- **Figure 1:**: Dross deposits on a pot roll.
- **Figure 2:**: Calphad-based phase-calculations of **A** Stellite^{™} and **B** Tribaloy^{™} and **C** an alloy according to the present invention.
- **Figure 3:**: LOM-image of a coated alloy layer in cross-section.
- **Figure 4:**: LOM-image of a coated alloy - top view.
- **Figure 5:**: 2-Theta XRD-ray of coated alloy with phase identification.

It is to be understood, that the embodiments shown in the figures are for illustration of the present invention and cannot be construed as being limiting on the present invention. Unless otherwise indicated, the drawings are intended to be read (e.g., cross-hatching, arrangement of parts, proportion, degree, etc.) together with the specification, and are to be considered a portion of the entire written description of this disclosure.

### DETAILED DESCRIPTION

In accordance with the present invention, there is herein detailed in a first aspect and embodiment thereof a Mo-Ni-based alloy consisting by total weight of the alloy of:

| | |
|---|---|
| Molybdenum (Mo) | 48.0 wt% - 52.0 wt%, |
| Chromium (Cr) | 2.5 wt% - 4.0 wt%, |
| Silicon (Si) | 1.4 wt% - 2.7 wt%, |
| Boron (B) | 1.0 wt% - 1.5 wt%, |
| Aluminum (Al) | 0.75 wt% - 1.25 wt%, |
| Carbon (C) | 0.10 wt% - 0.20 wt%, |
| Iron (Fe) | present but not exceeding 1.5 wt%, |
| Nitrogen (N) | not exceeding 0.05 wt%, |
| Oxygen (O) | not exceeding 0.02 wt%, |

the balance being nickel (Ni) and unavoidable impurities.

In a preferred embodiment of the compositions disclosed in US 4,949,836, the composition disclosed comprises 49-51 wt% Mo, 3.0-3.5 wt% Cr, 1.1-1.4 wt% B, 1.8-2.25 wt% Si, 0.12-0.18 wt% C, 0-1.5 wt% Fe, and 40.17-44.48 wt% Ni.

The present invention builds on the present inventors' surprising realization, that when aluminum is present within the given ranges of 0.75-1.25 wt%, when iron is present above the limit of an unavailable impurity, but below 1.5 wt%, and the amount of nitrogen and oxygen are limited as given above, the resulting alloys obtain a surprising resistance to molten galvanizing compositions, such as e.g., those mentioned in EP2010690B1, such as galvanizing or aluminizing, galvanneal, galvalume solutions.

Further, as can be seen by comparison with the preferred embodiment of US 4,949,836, the working ranges for the present alloys are slightly different also for the elements which are otherwise shared between the present alloys and those of US 4,949,836.

In the alloys of the present invention, nickel (Ni) is in balance to the total contents of the further elements of the alloy. Accordingly, while the total amount of nickel can vary between 38.3 wt% to 46.2 wt%, nickel is always added for balance. This is in contrast to the alloys of US 4,949,836 where nickel was not ubiquitously the balancing element of these alloys.

The present inventors have found that when alloys of the present are used for coating pot rolls, e.g., when coated using PTAW, LC, HVOF, HVAF and/or APS, dense and resistant coatings are formed. When the alloys of the present invention are applied in thicknesses from 0.1 - 5 mm, suitable coatings for pot rolls can be created.

For prior art coatings, such as Tribaloy^{™} or Stellite^{™} 6, it is known that interactions of liquid aluminum or AlₓSi_{y} with a corrosion and wear protective coating leads to metallurgical phase modifications in the contact zone. However, as shown in the experimental section, using the alloy with the chemical composition given in herein, phases are formed like Mo₅Si₃ and/or Cr₅B₃ that have corrosion-resistant and less brittle properties. As a result, a coating is available that has a longer service life than those coatings of the state of the art.

However, as shown in the experiments, the working window of the present alloys is rather narrow in terms of the allowable alloy compositions, wherefore to the best knowledge of the present inventors, alloying elements beyond the herein recited are not beneficial to the formation of the desired phases of Mo₅Si₃ and/or Cr₅B₃.

The present inventors have found that optimal results can be achieved when the alloys of the present invention are within the herein below given limits. Accordingly, there is herein in a preferred embodiment disclosed a Mo-Ni-based alloy consisting by total weight of the alloy of:

| | |
|---|---|
| Molybdenum (Mo) | 49.0 wt% - 51.0 wt%, |
| Chromium (Cr) | 3.0 wt% - 3.5 wt%, |
| Silicon (Si) | 1.8 wt% - 2.3 wt%, |
| Boron (B) | 1.1 wt% - 1.4 wt%, |
| Aluminum (Al) | 0.9 wt% - 1.1 wt%, |
| Carbon (C) | 0.12 wt% - 0.18 wt%, |
| Iron (Fe) | present but not exceeding 1.5 wt%, |
| Nitrogen (N) | not exceeding 0.05 wt%, |
| Oxygen (O) | not exceeding 0.02 wt%, |

the balance being nickel (Ni) and unavoidable impurities.

Surprisingly, but advantageously in light of the intended use of the present alloys, the alloys themselves are rather robust to the present of iron (Fe) in the alloys, which can be present in amounts up to 1.5 wt% without causing detrimental effects to the present alloys. However, if iron is not present in the alloys of the present invention to a level above the level of an unavoidable impurity, the alloys are not functional. Preferably, iron (Fe) is present in the alloys of the present invention from 0.01 wt% to 1.5 wt%, preferably from 0.02 wt% to 1.0 wt%, or more preferably from 0.03 wt% to 0.5 wt% iron, with lower amounts of iron being preferrable for durability of use. In contrast to the alloys of US 4,949,836, however, iron cannot be absent.

Contrary to this, it is very important in the present alloys to control and minimize the content of nitrogen (N) and oxygen (O) to not exceeding the herein given limitations, otherwise detrimental formation of oxides and nitrides may occur.

The present inventors have found that molybdenum (Mo) can be varied within the herein below limits in accordance with the general, preferred and more preferred embodiments of the present invention, and accordingly there is herein disclosed a Mo-Ni-based alloy according to the present invention, wherein molybdenum (Mo) is present from 48.3 wt% to 51.7 wt%, from 48.5 wt% to 51.5 wt%, or from 48.7 wt% to 51.3 wt%; preferably from 49.0 wt% to 51.0 wt%, or from 49.3 wt% to 50.7 wt%; more preferably from 49.5 wt% to 50.5 wt%, or from 49.7 wt% to 50.3 wt%; in the Mo-Ni-based alloy.

The present inventors have found that chromium (Cr) can be varied within the herein below limits in accordance with the general, preferred and more preferred embodiments of the present invention, and accordingly there is herein disclosed a Mo-Ni-based alloy according to the present invention, wherein chromium (Cr) is present from 2.7 wt% to 3.8 wt%, preferably from 3.0 wt% to 3.5 wt%, more preferably from 3.1 wt% to 3.4 wt%, in the Mo-Ni-based alloy.

The present inventors have found that silicon (Si) can be varied within the herein below limits in accordance with the general, preferred and more preferred embodiments of the present invention, and accordingly there is herein disclosed a Mo-Ni-based alloy according to the present invention, wherein silicon (Si) is present from 1.5 wt% to 2.6 wt%, from 1.6 wt% to 2.5 wt%, or from 1.7 wt% to 2.4 wt%; preferably from 1.8 wt% to 2.3 wt%, or from 1.9 wt% to 2.2 wt%; or more preferably from 2.0 wt% to 2.1 wt%; in the Mo-Ni-based alloy.

The present inventors have found that boron (B) can be varied within the herein below limits in accordance with the general, preferred and more preferred embodiments of the present invention, and accordingly there is herein disclosed a Mo-Ni-based alloy according to the present invention, wherein boron (B) is present from 1.05 wt% to 1.45 wt%, preferably from 1.1 wt% to 1.4 wt%, more preferably from 1.15 to 1.35 wt%, most preferably from 1.2 wt% to 1.3 wt%, in the in the Mo-Ni-based alloy.

The present inventors have found that aluminum (Al) can be varied within the herein below limits in accordance with the general, preferred and more preferred embodiments of the present invention, and accordingly there is herein disclosed a Mo-Ni-based alloy according to the present invention, wherein aluminum (Al) is present from 0.80 wt% to 1.2 wt%, preferably from 0.85 wt% to 1.15 wt%, more preferably from 0.90 wt% to 1.10 wt%, or most preferably from 0.95 wt% to 1.05 wt%, in the Mo-Ni-based alloy.

The present inventors have found that carbon (C) can be varied within the herein below limits in accordance with the general, preferred and more preferred embodiments of the present invention, and accordingly there is herein disclosed a Mo-Ni-based alloy according to the present invention, wherein carbon (C) is present from 0.11 wt% to 0.19 wt%, preferably from 0.12 wt% to 0.18 wt%, more preferably from 0.12 wt% to 0.17 wt%, from 0.12 wt% to 0.16 wt%, or most preferably from 0.12 wt% to 0.15 wt%, in the Mo-Ni-based alloy.

The present inventors have found that carbon (C) can be varied within the herein below limits in accordance with the general, preferred and more preferred embodiments of the present invention, and accordingly there is herein disclosed a Mo-Ni-based alloy according to the present invention, wherein iron (Fe) is present from 0.02 wt% to 1.5 wt%, from 0.03 to 1.3 wt%, or from 0.04 wt% to 1.0 wt%; preferably from 0.05 wt% to 0.9 wt%, from 0.06 wt% to 0.8 wt%, or from 0.07 wt% to 0.7 wt%; more preferably from 0.08 wt% to 0.6 wt%, from 0.08 wt% to 0.5 wt%, from 0.9 wt% to 0.4 wt%, or from 0.09 wt% to 0.3 wt%; most preferably from 0.10 wt% to 0.2 wt%, in the Mo-Ni-based alloy. As mentioned, iron (Fe) is a necessary component of the present alloys, however it also serves the role of filler to a certain extent, such that minimizing the content of iron is preferable for function, but having more than optimal iron for function in the alloys can be beneficial for reasons of cost.

In a second aspect of the present invention and embodiments thereof, there is herein detailed a Mo-Ni-based powder composition consisting by total weight of the power composition of:

| | |
|---|---|
| Molybdenum (Mo) | 48.0 wt% - 52.0 wt%, |
| Chromium (Cr) | 2.5 wt% - 4.0 wt%, |
| Silicon (Si) | 1.4 wt% - 2.7 wt%, |
| Boron (B) | 1.0 wt% - 1.5 wt%, |
| Aluminum (Al) | 0.75 wt% - 1.25 wt%, |
| Carbon (C) | 0.10 wt% - 0.20 wt%, |
| Iron (Fe) | present but not exceeding 1.5 wt%, |
| Nitrogen (N) | not exceeding 0.05 wt%, |
| Oxygen (O) | not exceeding 0.02 wt%, |

the balance being nickel (Ni) and unavoidable impurities, for forming a Mo-Ni-based alloy according to any of the preceding claims.

The present inventors have found that optimal results can be achieved when the alloys of the present invention are within the herein below given limits. Accordingly, there is herein in a preferred embodiment disclosed a Mo-Ni-based powder composition consisting by total weight of the power composition of:

| | |
|---|---|
| Molybdenum (Mo) | 49.0 wt% - 51.0 wt%, |
| Chromium (Cr) | 3.0 wt% - 3.5 wt%, |
| Silicon (Si) | 1.8 wt% - 2.3 wt%, |
| Boron (B) | 1.1 wt% - 1.4 wt%, |
| Aluminum (Al) | 0.9 wt% - 1.1 wt%, |
| Carbon (C) | 0.12 wt% - 0.18 wt%, |
| Iron (Fe) | present but not exceeding 1.5 wt%, |
| Nitrogen (N) | not exceeding 0.05 wt%, |
| Oxygen (O) | not exceeding 0.02 wt%, |

the balance being nickel (Ni) and unavoidable impurities.

In a preferred embodiment, the Mo-Ni-based powder composition is a pre-alloyed powder composition. Such pre-alloyed powder compositions are particular suitable for use in surface cladding, such as PTAW, LC, HVOF, HVAF and/or APS, for homogeneity of the resulting coating.

In accordance with the desired outcome of a coating alloy, the individual chemical elements contained in the powders may be varied as detailed herein below.

In an embodiment of the Mo-Ni-based powder composition, molybdenum (Mo) is present from 48.3 wt% to 51.7 wt%, from 48.5 wt% to 51.5 wt%, or from 48.7 wt% to 51.3 wt%; preferably from 49.0 wt% to 51.0 wt%, or from 49.3 wt% to 50.7 wt%; more preferably from 49.5 wt% to 50.5 wt%, or from 49.7 wt% to 50.3 wt%; in the Mo-Ni-based power composition.

In an embodiment of the Mo-Ni-based powder composition, chromium (Cr) is present from 2.7 wt% to 3.8 wt%, preferably from 3.0 wt% to 3.5 wt%, more preferably from 3.1 wt% to 3.4 wt%, in the Mo-Ni-based power composition.

In an embodiment of the Mo-Ni-based powder composition, silicon (Si) is present from 1.5 wt% to 2.6 wt%, from 1.6 wt% to 2.5 wt%, or from 1.7 wt% to 2.4 wt%; preferably from 1.8 wt% to 2.3 wt%, or from 1.9 wt% to 2.2 wt%; or more preferably from 2.0 wt% to 2.1 wt%; in the Mo-Ni-based power composition.

In an embodiment of the Mo-Ni-based powder composition, boron (B) is present from 1.05 wt% to 1.45 wt%, preferably from 1.1 wt% to 1.4 wt%, more preferably from 1.15 to 1.35 wt%, most preferably from 1.2 wt% to 1.3 wt%, in the Mo-Ni-based power composition.

In an embodiment of the Mo-Ni-based powder composition, aluminum (Al) is present from 0.80 wt% to 1.2 wt%, preferably from 0.85 wt% to 1.15 wt%, more preferably from 0.90 wt% to 1.10 wt%, or most preferably from 0.95 wt% to 1.05 wt%, in the Mo-Ni-based power composition.

In an embodiment of the Mo-Ni-based powder composition, carbon (C) is present from 0.11 wt% to 0.19 wt%, preferably from 0.12 wt% to 0.18 wt%, more preferably from 0.12 wt% to 0.17 wt%, from 0.12 wt% to 0.16 wt%, or most preferably from 0.12 wt% to 0.15 wt%, in the Mo-Ni-based power composition.

In an embodiment of the Mo-Ni-based powder composition, iron (Fe) is present from 0.02 wt% to 1.5 wt%, from 0.03 to 1.3 wt%, or from 0.04 wt% to 1.0 wt%; preferably from 0.05 wt% to 0.9 wt%, from 0.06 wt% to 0.8 wt%, or from 0.07 wt% to 0.7 wt%; more preferably from 0.08 wt% to 0.6 wt%, from 0.08 wt% to 0.5 wt%, from 0.9 wt% to 0.4 wt%, or from 0.09 wt% to 0.3 wt%; most preferably from 0.10 wt% to 0.2 wt%, in the Mo-Ni-based power composition.

In a third aspect and embodiments thereof, there is herein detailed a coated object comprising a coated layer of an Mo-Ni-based alloy, wherein the Mo-Ni-base alloy is according to any of the embodiments detailed herein. In an embodiment thereof, the coating layer thickness is from 0.1 to 5 mm. In a further embodiment thereof, the coated object is a pot roll for a zinc and/or aluminum galvanizing sink. In a further embodiment thereof, coating is done by one or more of plasma transfer arc welding (PTAW), laser cladding (LC), High velocity oxygen fuel spraying (HVOF), High velocity air fuel spraying (HVAF) and/or atmospheric plasma spraying (APS) using a Mo-Ni-based powder according to any of the embodiments detailed herein.

In a fourth aspect and embodiments thereof, there is herein detailed the use of an Mo-Ni-based alloy according to any of the embodiments detailed herein in a coating process. In an embodiment thereof, coating is done by one or more of plasma transfer arc welding (PTAW), laser cladding (LC), High velocity oxygen fuel spraying (HVOF), High velocity air fuel spraying (HVAF) and/or atmospheric plasma spraying (APS) using a Mo-Ni-based powder according to any of the embodiments detailed herein.

### EXAMPLES

The present inventors have found that when alloys of the present are used for coating pot rolls, e.g., when coated using PTAW, LC, HVOF, HVAF and/or APS, dense and resistant coatings are formed. The material can be applied via in thicknesses from 0.1 - 5 mm. Coatings with a high content of borides are created.

It is known that interactions of liquid aluminum or AlₓSi_{y} with a corrosion and wear protective coating leads to metallurgical phase modifications in the contact zone. Using the material with the chemical composition given in the table below, phases are formed like Mo₅Si₃ or Cr₅B₃ that have corrosion-resistant and less brittle properties. As a result, a coating is available that has a longer service life than those coatings of the state of the art.

### Example 1 - Calphad-based calculations

Calphad-based calculations were used to predict the phases formed during the process. Calphad (CALculation of PHAse Diagrams) is a phenomenological method, based on Gibbs energy minimization to find stable phases under equilibrium and has been used for more than 3 decades for material design and development. Thermo-Calc program version 2022b with the help of TCFE9 database was used for calculations.

Phase fractions of different alloys versus temperature were calculated to obtain an understanding of each alloy. Then, 1 mole of each alloy was assumed in contact with a mole liquid Al containing 8 %wt Si to predict the behavior of the alloy during galvanization.

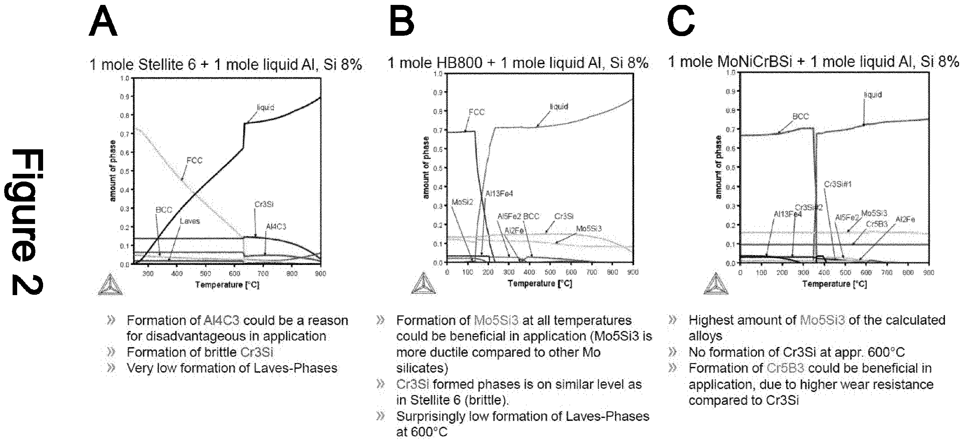

Comparative calculation results show (Figure 2A) that in Stellite^{™} 6, some carbides are formed that transfer to Al₄C₃ in contact with the molten bath. W and Cr present in Stellite^{™} react with Si in the bath and form laves phase and Cr3Si, which are both brittle phases.

In the case of Tribaloy^{™}, calculation results show (Figure 2B) that µ-phase (Mo-rich phase) and CosMo phase present in the alloy transfer to Mo₅Si₃ in contact with bath. Mo₅Si₃ is more ductile compared to other Mo silicates. Amount of Cr₃Si in the alloy decreases in contact with bath as Si leaves the µ-phase to form Mo₅Si₃. Some intermetallics of Al-Fe form, which seem to be neutral according to the literature. Calculation results of the present invention (MoNiCrBSi, c.f. Figure 2c) is on the other hand a different class of material. Cr₅B₃ is formed instead of Cr₃Si, which has a high wear resistance. Mo₅Si₃ and Al-Fe intermetallics are also formed in contact with bath.

### Example 2 - Test samples - Macroscopic properties

**Table 1: Composition of tested samples**

| **Sample** | **C** | **Al** | **Cr** | **Fe** | **Mo** | **B** | **Si** | **Ni** |
|---|---|---|---|---|---|---|---|---|
| **S1** | 0.14 | 1.02 | 3.35 | 0.17 | 50.29 | 1.23 | 2.13 | Rest |
| **S2** | 0.14 | 1.04 | 3.08 | 0.13 | 50.02 | 1.39 | 1.94 | Rest |
| **S3** | 0.13 | 1.13 | 3.10 | 0.14 | 49.86 | 1.18 | 2.12 | Rest |
| **S4** | 0.13 | 1.10 | 3.10 | 0.10 | 49.90 | 1.20 | 2.12 | Rest |

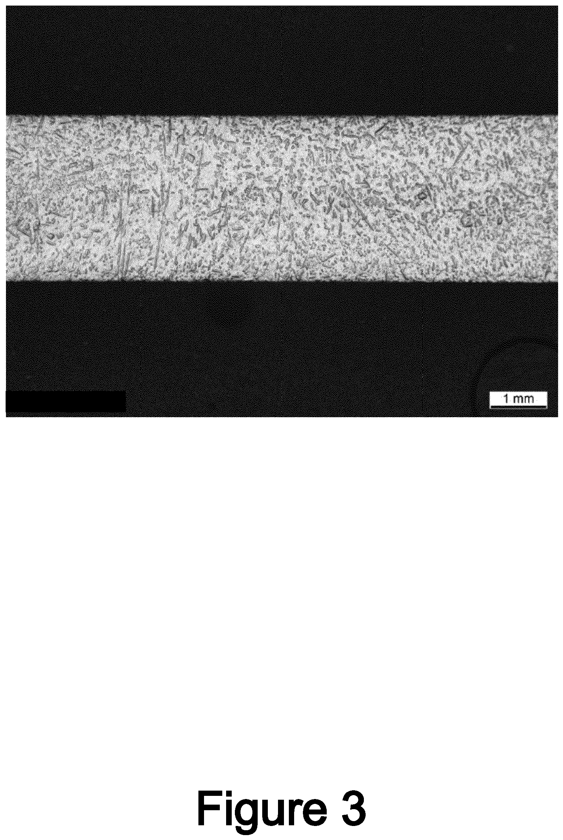

Samples S1- S4 were prepared according to the compositions given in Table 1. The samples were PTAW to a thickness of 3 mm (c.f., Figure 3) and tested with respect to hardness (HV0.1) for the boride phase, the intermediate phases and the matrix, and the overall elasticity module was measured (cf. Table 2).

The pre-alloyed powders used in the experiments were determined by sieving to have the following particle distribution: max 5% > 125 µm; 89.5% - 98.5 %, 63 µm < powder < 125 µm; max 5% 38 µm < powder < 63 µm; max 0.5% < 0.38 µm.

**Table 2: Measured hardness of alloy phases.**

| **Alloy phase** | **Hardness [HV0.1]** |
|---|---|
| Borides | 2200-2300 |
| Intermediate phases | 1000-1200 |
| Matrix | 700-750 |
| Overall elasticity module | 240 GPa |

As can be deferred from Table 2, within the ranges of compositions studied, no significant variation in the macroscopic properties of the tested alloys was found.

### Example 3 - Microstructure examined by microscopy

The samples according to the Table 1 were subjected to examination using light optical microscopy.

Figure 3 shows a sample according to the invention in cross-section. As can be seen from the LOM-image, the coated alloy layer is without defects and the interstitial phases in the matrix-alloy are clearly visible. The layer is approximately 3 mm thick.

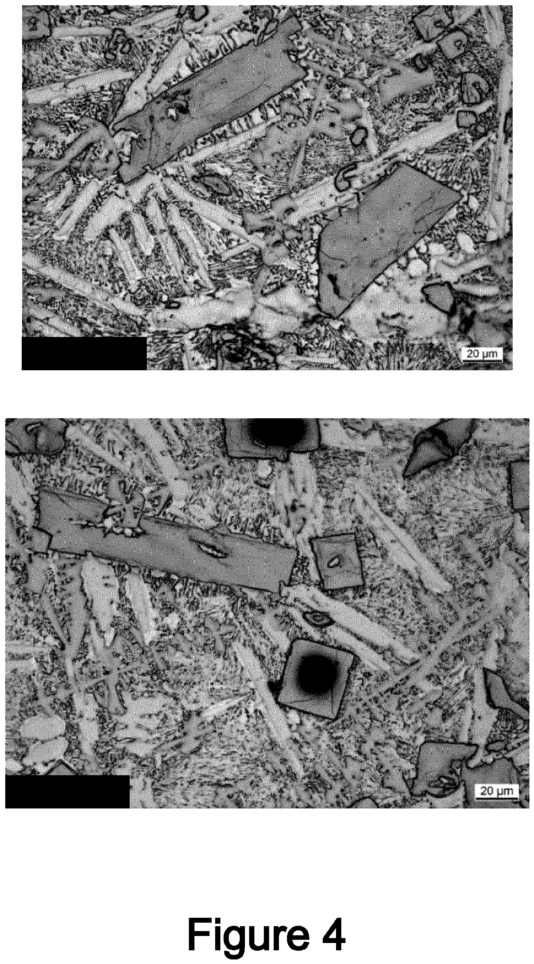

Figure 4 shows two close-ups of the coated alloy layer from top view with a focus on the interstitial phases.

### Example 4 - Microstructure examined using XRD.

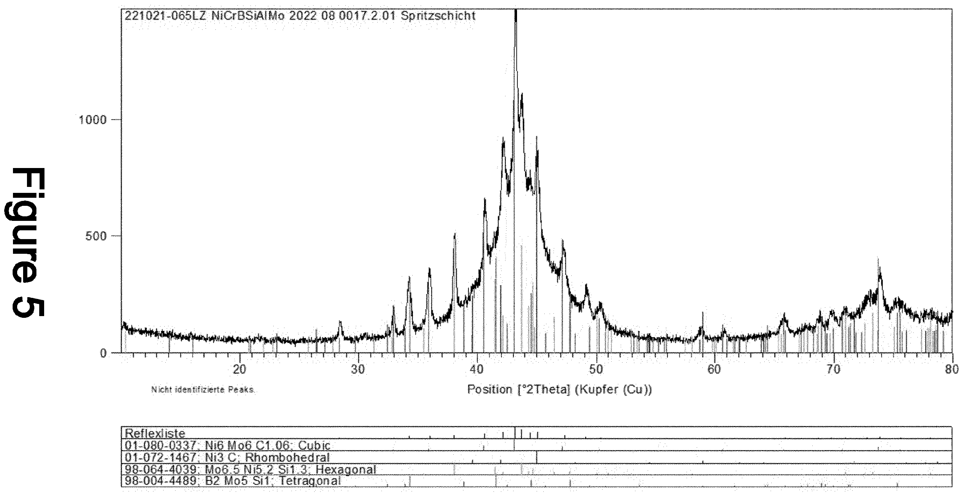

The coated alloy layer was subjected to wide-angle (2Theta) XRD examination. The results are shown in Figure 5 together with the determined constituent phases giving rise to the observed peaks in the XRD image.

### CLOSING COMMENTS

Although the present invention has been described in detail for purpose of illustration, it is understood that such detail is solely for that purpose, and variations can be made therein by those skilled in the art in practicing the claimed subject matter, from a study of the drawings, the disclosure, and the appended claims.

The term "comprising" when used in the claims does not exclude other elements or steps. The indefinite article "a" or "an" as used in the claims does not exclude a plurality. A reference sign used in a claim shall not be construed as limiting the scope.

## Claims

1. A Mo-Ni-based alloy consisting by total weight of the alloy of:
| | |
|---|---|
| Molybdenum (Mo) | 48.0 wt% - 52.0 wt%, |
| Chromium (Cr) | 2.5 wt% - 4.0 wt%, |
| Silicon (Si) | 1.4 wt% - 2.7 wt%, |
| Boron (B) | 1.0 wt% - 1.5 wt%, |
| Aluminum (Al) | 0.75 wt% - 1.25 wt%, |
| Carbon (C) | 0.10 wt% - 0.20 wt%, |
| Iron (Fe) | present but not exceeding 1.5 wt%, |
| Nitrogen (N) | not exceeding 0.05 wt%, |
| Oxygen (O) | not exceeding 0.02 wt%, |
the balance being nickel (Ni) and unavoidable impurities.

2. A Mo-Ni-based alloy according to claim 1, wherein molybdenum (Mo) is present from 48.3 wt% to 51.7 wt%, from 48.5 wt% to 51.5 wt%, or from 48.7 wt% to 51.3 wt%; preferably from 49.0 wt% to 51.0 wt%, or from 49.3 wt% to 50.7 wt%; more preferably from 49.5 wt% to 50.5 wt%, or from 49.7 wt% to 50.3 wt%; in the Mo-Ni-based alloy.

3. A Mo-Ni-based alloy according to claim 1 or claim 2, wherein chromium (Cr) is present from 2.7 wt% to 3.8 wt%, preferably from 3.0 wt% to 3.5 wt%, more preferably from 3.1 wt% to 3.4 wt%, in the Mo-Ni-based alloy.

4. A Mo-Ni-based alloy according to any preceding claim, wherein silicon (Si) is present from 1.5 wt% to 2.6 wt%, from 1.6 wt% to 2.5 wt%, or from 1.7 wt% to 2.4 wt%; preferably from 1.8 wt% to 2.3 wt%, or from 1.9 wt% to 2.2 wt%; or more preferably from 2.0 wt% to 2.1 wt%; in the Mo-Ni-based alloy.

5. A Mo-Ni-based alloy according to any preceding claim, wherein boron (B) is present from 1.05 wt% to 1.45 wt%, preferably from 1.1 wt% to 1.4 wt%, more preferably from 1.15 to 1.35 wt%, most preferably from 1.2 wt% to 1.3 wt%, in the in the Mo-Ni-based alloy.

6. A Mo-Ni-based alloy according to any preceding claim, wherein aluminum (Al) is present from 0.80 wt% to 1.2 wt%, preferably from 0.85 wt% to 1.15 wt%, more preferably from 0.90 wt% to 1.10 wt%, or most preferably from 0.95 wt% to 1.05 wt%, in the Mo-Ni-based alloy.

7. A Mo-Ni-based alloy according to any preceding claim, wherein carbon (C) is present from 0.11 wt% to 0.19 wt%, preferably from 0.12 wt% to 0.18 wt%, more preferably from 0.12 wt% to 0.17 wt%, from 0.12 wt% to 0.16 wt%, or most preferably from 0.12 wt% to 0.15 wt%, in the Mo-Ni-based alloy.

8. A Mo-Ni-based alloy according to any preceding claim, wherein iron (Fe) is present from 0.02 wt% to 1.5 wt%, from 0.03 to 1.3 wt%, or from 0.04 wt% to 1.0 wt%; preferably from 0.05 wt% to 0.9 wt%, from 0.06 wt% to 0.8 wt%, or from 0.07 wt% to 0.7 wt%; more preferably from 0.08 wt% to 0.6 wt%, from 0.08 wt% to 0.5 wt%, from 0.9 wt% to 0.4 wt%, or from 0.09 wt% to 0.3 wt%; most preferably from 0.10 wt% to 0.2 wt%, in the Mo-Ni-based alloy.

9. A Mo-Ni-based powder composition consisting by total weight of the power composition of:
| | |
|---|---|
| Molybdenum (Mo) | 48.0 wt% - 52.0 wt%, |
| Chromium (Cr) | 2.5 wt% - 4.0 wt%, |
| Silicon (Si) | 1.4 wt% - 2.7 wt%, |
| Boron (B) | 1.0 wt% - 1.5 wt%, |
| Aluminum (Al) | 0.75 wt% - 1.25 wt%, |
| Carbon (C) | 0.10 wt% - 0.20 wt%, |
| Iron (Fe) | present but not exceeding 1.5 wt%, |
| Nitrogen (N) | not exceeding 0.05 wt%, |
| Oxygen (O) | not exceeding 0.02 wt%, |
the balance being nickel (Ni) and unavoidable impurities, for forming a Mo-Ni-based alloy according to any of the preceding claims.

10. A Mo-Ni-based powder composition according to claim 9, wherein the Mo-Ni-based powder composition is a pre-alloyed powder composition.

11. A Mo-Ni-based powder composition according to claim 9 or claim 10, wherein molybdenum (Mo) is present from 48.3 wt% to 51.7 wt%, from 48.5 wt% to 51.5 wt%, or from 48.7 wt% to 51.3 wt%; preferably from 49.0 wt% to 51.0 wt%, or from 49.3 wt% to 50.7 wt%; more preferably from 49.5 wt% to 50.5 wt%, or from 49.7 wt% to 50.3 wt%; in the Mo-Ni-based power composition.

12. A Mo-Ni-based powder composition according to any of the claims 9 to 11, wherein chromium (Cr) is present from 2.7 wt% to 3.8 wt%, preferably from 3.0 wt% to 3.5 wt%, more preferably from 3.1 wt% to 3.4 wt%, in the Mo-Ni-based power composition.

13. A Mo-Ni-based powder composition according to any of the claims 9 to 12, wherein silicon (Si) is present from 1.5 wt% to 2.6 wt%, from 1.6 wt% to 2.5 wt%, or from 1.7 wt% to 2.4 wt%; preferably from 1.8 wt% to 2.3 wt%, or from 1.9 wt% to 2.2 wt%; or more preferably from 2.0 wt% to 2.1 wt%; in the Mo-Ni-based power composition.

14. A Mo-Ni-based powder composition according to any of the claims 9 to 13, wherein boron (B) is present from 1.05 wt% to 1.45 wt%, preferably from 1.1 wt% to 1.4 wt%, more preferably from 1.15 to 1.35 wt%, most preferably from 1.2 wt% to 1.3 wt%, in the Mo-Ni-based power composition.

15. A Mo-Ni-based powder composition according to any of the claims 9 to 14, wherein aluminum (Al) is present from 0.80 wt% to 1.2 wt%, preferably from 0.85 wt% to 1.15 wt%, more preferably from 0.90 wt% to 1.10 wt%, or most preferably from 0.95 wt% to 1.05 wt%, in the Mo-Ni-based power composition.

16. A Mo-Ni-based powder composition according to any of the claims 9 to 15, wherein carbon (C) is present from 0.11 wt% to 0.19 wt%, preferably from 0.12 wt% to 0.18 wt%, more preferably from 0.12 wt% to 0.17 wt%, from 0.12 wt% to 0.16 wt%, or most preferably from 0.12 wt% to 0.15 wt%, in the Mo-Ni-based power composition.

17. A Mo-Ni-based powder composition according to any of the claims 9 to 16, wherein iron (Fe) is present from 0.02 wt% to 1.5 wt%, from 0.03 to 1.3 wt%, or from 0.04 wt% to 1.0 wt%; preferably from 0.05 wt% to 0.9 wt%, from 0.06 wt% to 0.8 wt%, or from 0.07 wt% to 0.7 wt%; more preferably from 0.08 wt% to 0.6 wt%, from 0.08 wt% to 0.5 wt%, from 0.9 wt% to 0.4 wt%, or from 0.09 wt% to 0.3 wt%; most preferably from 0.10 wt% to 0.2 wt%, in the Mo-Ni-based power composition.

18. A coated object comprising a coated layer of an Mo-Ni-based alloy, wherein the Mo-Ni-base alloy is according to any of the claims 1 to 8.

19. A coated object according to claim 18, wherein the coating layer thickness is from 0.1 mm to 5 mm.

20. A coated object according to either claim 18 or claim 19, wherein the coated object is a molten metal application.

21. A coated object according to claim 20, wherein the coated object is a pot roll for a zinc and/or an aluminum galvanizing sink.

22. A coated object according to any of the claims 18 to 21, wherein coating is done by one or more of plasma transfer arc welding (PTAW), laser cladding (LC), High velocity oxygen fuel spraying (HVOF), High velocity air fuel spraying (HVAF) and/or atmospheric plasma spraying (APS) using a Mo-Ni-based powder according to any of the claims 9 to 17.

23. Use of an Mo-Ni-based alloy according to any of the claims 1 to 8 in a coating process of an object.

24. Use of an Mo-Ni-based alloy according to claim 23, wherein the object is a molten metal application.

25. Use of an Mo-Ni-based alloy according to claim 24, wherein the object is a pot roll for a galvanizing sink.

26. Use of an Mo-Ni-based alloy according to claim 23 to claim 25, wherein coating is done by one or more of plasma transfer arc welding (PTAW), laser cladding (LC), High velocity oxygen fuel spraying (HVOF), High velocity air fuel spraying (HVAF) and/or atmospheric plasma spraying (APS) using a Mo-Ni-based powder according to any of the claims 9 to 17.
